# FASCICULE DE BREVET EUROPEEN

(11) **EP 3 619 634 B1**
(45) Date de publication et mention de la délivrance du brevet: **27.11.2024**
(21) Numéro de dépôt: 18730024.9
(22) Date de dépôt: 02.05.2018
(51) Int. Cl.: H04L 9/40, G06F 21/32, G06F 21/55, G06F 21/82, G06F 21/56, G06F 21/60, G06F 21/85, G06F 21/86, G06F 21/88

(54) **PÉRIPHÉRIQUE PORTABLE DE COMMUNICATION, SYSTÈME DE PROTECTION D'UN TERMINAL PORTABLE ET PROCÉDÉ DE COMMUNICATION**
TRAGBARES KOMMUNIKATIONSPERIPHERIEGERÄT, SYSTEM ZUM SCHUTZ EINES TRAGBAREN ENDGERÄTS UND KOMMUNIKATIONSVERFAHREN
PORTABLE COMMUNICATION PERIPHERAL, SYSTEM FOR PROTECTING A PORTABLE TERMINAL, AND COMMUNICATION METHOD

(30) Priorité: 02.05.2017 WO PCT/FR2017/051051
(43) Date de publication de la demande: 11.03.2020
(73) Titulaire: Leal Monteiro, Vladimir Mickaël, 34150 Saint Jean de Fos (FR)
(72) Inventeur: Leal Monteiro, Vladimir Mickaël, 34150 Saint Jean de Fos (FR)
(74) Mandataire: Cornuejols, Marine Sophie
(86) Numéro de dépôt international: PCT/FR2018/051090
(87) Numéro de publication internationale: WO 2018/202995

(56) Documents cités:
- WO-A1-2011/119221
- WO-A1-2011/119221
- WO-A1-2012/162099
- WO-A1-2012/162099
- WO-A1-2016/179611
- WO-A1-2016/179611
- US-A1- 2010 333 182
- US-A1- 2010 333 182
- US-A1- 2011 231 905
- US-A1- 2011 231 905
- US-A1- 2014 090 046
- US-A1- 2014 337 558
- US-A1- 2016 110 567
- US-B1- 8 402 528
- US-B1- 8 402 528
- US-B1- 8 732 482

## Description

### DOMAINE TECHNIQUE DE L'INVENTION

La présente invention vise un périphérique portable de communication, un système de protection d'un terminal portable et un procédé de communication. Elle s'applique, notamment, au domaine de la sécurité informatique et, en particulier, au sous-domaine de la privacité des données lors d'un déplacement de terminal informatique.

### ÉTAT DE LA TECHNIQUE

Dans le domaine de la sécurité informatique, en particulier des entreprises et administrations ou organismes dont les données sont sensibles, il est habituel de déconseiller voire d'interdire au personnel l'utilisation d'ordinateurs portables en dehors du réseau de données propre à l'entreprise. En effet, ce réseau de données dans la structure est généralement protégé par un pare-feu qui sécurise l'ensemble des terminaux à l'intérieur du réseau de tentatives malveillantes de piratage informatique.

En effet, les accès non-protégés au réseau internet, filaires ou sans-fil, présentent d'importants risques d'intrusion ou de fausses directions, par exemple. Ces accès non-protégés peuvent typiquement être des bornes d'accès Wi-Fi publiques, situées dans des gares, des hôtels ou des aéroports par exemple.

Ainsi, par exemple, les attaques de types « homme du milieu » (« middle-man », en anglais) visent à re-router le trafic depuis un terminal communicant vers un serveur non désiré par l'utilisateur du terminal en raison d'un remplacement des tables DNS (pour « Domain Name Server », traduit par Serveur de Noms de Domaines) au niveau du terminal. Ces attaques sont particulièrement courantes sur les systèmes d'exploitation tels que Windows (marque déposée), et ces systèmes d'exploitation sont incapables de se protéger seuls contres de telles attaques.

Il n'existe, à ce jour, aucune solution fiable et mobile, pour qu'un ordinateur portable accède de manière sécurisée à un réseau non-protégé.

De la même manière, lors des échanges de données entre un ordinateur et un périphérique de stockage de données, le terminal peut être infecté par un logiciel malveillant et ensuite infecter tout un réseau auquel l'ordinateur appartient.

Ainsi, jusqu'à présent, quand des données doivent être transportées sur un périphérique, de type clés USB (pour « Universal Serial Bus », traduit par bus universel en série) ou un disque dur à protéger, on a recours à l'encodage, qui peut être considérée comme une protection passive des données. Cette protection est caractérisée comme passive car elle ne s'aperçoit d'aucune tentative d'intrusion ni n'est capable d'agir en cas d'intrusion.

En cas de vol du périphérique de stockage, et moyennant un temps de calcul plus ou moins long de terminaux de piratage du périphérique, la clé de codage finit par être décodée, rendant de fait les données du périphérique accessible à celui qui en est en possession.

Il n'existe, à ce jour, aucune solution fiable, et aussi mobile, pour qu'un ordinateur portable accède de manière sécurisée à une ressource d'un périphérique de stockage de données.

Il existe, par ailleurs, des failles de sécurité propre aux périphériques USB. En effet, la norme USB a pour principal avantage son caractère immédiat et « plug & play » (traduit par « brancher et utiliser »). Cet avantage a fait de cette technologie le principal standard pour l'échange entre périphériques et ordinateurs.

Toutefois, cette technologie présente des risques de piratage, le périphérique ou l'ordinateur étant chacun susceptible d'être vérolés et de chercher à propager un virus. Ainsi, certains malwares copient ou transmettent discrètement des données de la clé vers le terminal ou inversement.

Il n'existe, à ce jour, aucune solution fiable, et aussi mobile, pour qu'un ordinateur portable accède de manière sécurisée à un périphérique USB.

On connaît le document US2014/090046, qui décrit un élément matériel qui se connecte à un appareil mobile et filtre les attaques et les codes malveillants, selon une politique de sécurité pour déterminer s'il faut transférer le contenu destiné au dispositif mobile vers le dispositif mobile, US2014/337558, qui décrit un appareil comprenant une mémoire stockant un hyperviseur pour déterminer si un ou plusieurs dispositifs USB en communication avec l'hyperviseur sont autorisés à communiquer avec un système d'exploitation hôte de l'hyperviseur, et US 8 732 482, qui décrit un procédé et un appareil pour crypter de manière incrémentielle des informations stockées, qui peuvent être appliqués à un support existant stockant des informations non cryptées. Les informations peuvent être cryptées et/ou décryptées de manière conditionnelle si nécessaire et une zone de stockage séparée peut être utilisée pour enregistrer si un bloc d'informations donné est stocké crypté ou non crypté. Divers mécanismes et politiques peuvent également être utilisés pour gérer, définir et éliminer les clés de chiffrement.

### OBJET DE L'INVENTION

La présente invention vise à remédier à tout ou partie de ces inconvénients.

À cet effet, la présente invention vise un périphérique selon la revendication 1 et un procédé selon la revendication 13. L'invention est définie par les revendications indépendantes. Des modes de réalisation préférés sont définis par les revendications dépendantes.

### BRÈVE DESCRIPTION DES FIGURES

D'autres avantages, buts et caractéristiques particulières de l'invention ressortiront de la description non limitative qui suit d'au moins un mode de réalisation particulier du dispositif, du système et du procédé objets de la présente invention, en regard des dessins annexés, dans lesquels :
- la figure 1 représente, schématiquement, un premier mode de réalisation particulier du périphérique objet de la présente invention,
- la figure 2 représente, schématiquement, un mode de réalisation particulier du système objet de la présente invention,
- la figure 3 représente, schématiquement et sous forme d'un logigramme, une succession d'étapes particulière du procédé objet de la présente invention,
- la figure 4 représente, schématiquement, un deuxième mode de réalisation particulier du périphérique objet de la présente invention,
- la figure 5 représente, schématiquement, un troisième mode de réalisation particulier du périphérique objet de la présente invention,
- la figure 6 représente, schématiquement, un quatrième mode de réalisation particulier du périphérique objet de la présente invention,
- la figure 7 représente, schématiquement, un cinquième mode de réalisation particulier du périphérique objet de la présente invention,
- la figure 8 représente, schématiquement, un sixième mode de réalisation particulier du périphérique objet de la présente invention,
- la figure 9 représente, schématiquement, un premier mode de réalisation particulier du système objet de la présente invention et
- la figure 10 représente, schématiquement, un deuxième mode de réalisation particulier du système objet de la présente invention.

### DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse. En particulier, les moyens présentés en regard de chacun des modes de réalisation du périphérique peuvent être intégrés à n'importe quel autre mode de réalisation du périphérique.

On note dès à présent que les figures ne sont pas à l'échelle.

On appelle « terminal portable » un dispositif comportant une unité de calcul et une interface homme-machine permettant la commande de l'unité de calcul. Ce terminal portable comporte, ou non, un connecteur filaire ou sans-fil à un réseau 105 de données.

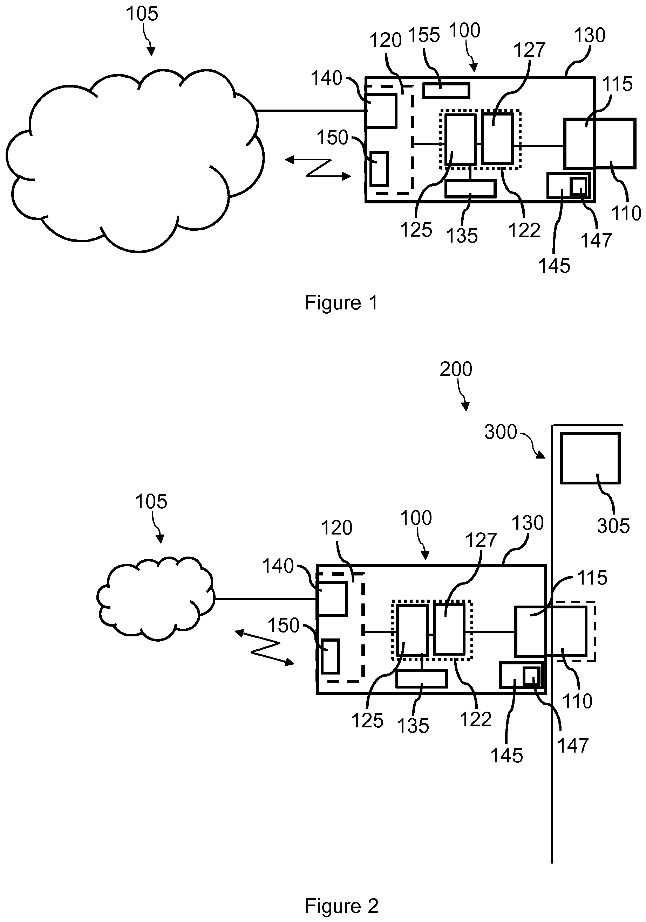

On observe, sur la figure 1, une vue schématique d'un mode de réalisation du périphérique 100 objet de la présente invention. Ce périphérique 100 portable de communication avec un réseau 105 de données mettant en oeuvre le protocole internet, comporte :
- un connecteur 110 pour relier mécaniquement et établir une communication filaire, de manière amovible, entre le périphérique et un terminal portable,
- un premier moyen 115 de communication bidirectionnelle filaire avec le terminal portable,
- un deuxième moyen 120 de communication bidirectionnelle avec un réseau de données et
- une unité 122 de sécurisation de la communication entre le terminal portable et le réseau de données, cette communication étant réalisée entre le premier et le deuxième moyens de communication,
les moyens de communication et l'unité de sécurisation étant embarqués dans un boîtier 130 unique amovible du terminal portable.

Le réseau 105 de données mis en oeuvre est le réseau dit « Internet » dont l'architecture, largement documentée dans l'art antérieur et dans de nombreux ouvrages de référence, n'est pas reprise ici.

Le périphérique 100 est configuré pour être connecté au réseau 105 de données de toutes les manières habituelles, de manière filaire ou sans-fil.

Dans des variantes où le périphérique 100 se connecte de manière filaire, le deuxième moyen de communication 120 du périphérique 100 comporte un connecteur 140 Ethernet. Ce connecteur 140 est, par exemple, une prise femelle Ethernet configurée pour recevoir un câble dit « RJ45 ». Dans des variantes, le connecteur 140 comporte à la fois la prise femelle et un câble de connexion (non référencé) à une prise femelle du réseau 105 de données.

Dans des variantes où le périphérique 100 se connecte de manière sans-fil, le deuxième moyen 120 de communication comporte une antenne 150 fonctionnant selon le standard IEEE 802.11 dit « Wi-Fi ». Les antennes Wi-Fi sont largement détaillées à la fois dans l'art antérieur et dans les ouvrages de référence du domaine, leur détail d'implémentation ou de fonctionnement n'est donc pas repris ici.

Dans des variantes, non représentées, où le périphérique 100 se connecte de manière sans-fil, le deuxième moyen 120 de communication comporte une antenne 150 fonctionnant selon le standard Bluetooth (marque déposée). Les antennes Bluetooth sont largement détaillées à la fois dans l'art antérieur et dans les ouvrages de référence du domaine, leur détail d'implémentation ou de fonctionnement n'est donc pas repris ici.

Cette antenne 150 est configurée pour se connecter à un point d'accès (non représenté) sans-fil du réseau 105 de données. Les informations et paramètres transférés pour établir la connexion entre le périphérique 100 et le point d'accès dépendent des particularités d'implémentation du standard Wi-Fi ou Bluetooth au niveau de ce point d'accès.

Dans des variantes, le deuxième moyen 120 de communication comporte à la fois un connecteur pour liaison filaire et une antenne pour liaison sans-fil avec le réseau 105 de données.

Dans des variantes, le deuxième moyen 120 de communication comporte :
- une pluralité de connecteurs filaires et/ou
- une pluralité d'antennes sans-fil.

Le périphérique 100 est connecté au terminal portable par le biais du connecteur 110. La nature de ce connecteur 110 dépend de la nature d'au moins un connecteur du terminal portable visé lors de la conception du périphérique 100.

Préférentiellement, ce connecteur 110 est une prise mâle définie selon la norme USB (pour « Universal Serial Bus », traduit par bus universel en série) configurée pour être insérée dans un port USB femelle du terminal.

Ce connecteur 110 relie mécaniquement le périphérique 100 au terminal portable et, conjointement, permet l'établissement d'une communication entre ce terminal et le périphérique 100.

Dans des variantes, le connecteur 110 mécanique et la liaison de communication entre le terminal portable et le périphérique sont distincts.

Le périphérique 100 communique avec le terminal portable par la mise en oeuvre du premier moyen 115 de communication.

Le premier moyen 115 de communication est, par exemple, une carte réseau associée au connecteur USB du périphérique 100.

L'unité de sécurisation 122 est un circuit électronique comportant au moins un élément parmi :
- un pare-feu 125 filtrant des paquets, reçus du réseau de données et destinés au terminal portable, comportant une unité de calcul configurée pour exécuter un logiciel de pare-feu et
- un système 127 de gestion de DNS autonome.

Le premier moyen 115 et le deuxième moyen 120 de communication peuvent ainsi être situés de part et d'autre du pare-feu 125. Ce pare-feu 125 agit selon une politique de sécurité prédéterminée lors de la fabrication du périphérique 100 et éventuellement mise à jour par la connexion du périphérique 100 à un serveur sécurisé (non représenté) du constructeur du périphérique 100.

Ce pare-feu 125 fonctionne, structurellement, comme tout pare-feu existant et déjà amplement décrit dans la littérature de référence.

Le système 127 de gestion de DNS (pour « Domain Name System », traduit par système de noms de domaines) comporte un registre de traduction de noms de domaines en adressage sur le réseau 105 de données. Ce système 127 est prédéterminé lors de la fabrication du périphérique 100 et éventuellement mis à jour par la connexion du périphérique 100 à un serveur sécurisé (non représenté) du constructeur du périphérique 100. Ce système 127 est défini indépendamment d'un quelconque système d'exploitation.

Dans un mode de fonctionnement, le système 127 de gestion de DNS permet l'obtention directe de l'adresse d'un nom de domaine pour une transmission.

Dans un autre mode de fonctionnement, le système 127 de gestion de DNS compare une adresse enregistrée correspondant à un nom de domaine avec une adresse du nom de domaine reçu d'un DNS externe mis en oeuvre par le réseau de donnée. Si les deux adresses sont différentes, la communication avec le réseau de donnée est interrompue en raison de risques de sécurité.

Les moyens, 115 et 120, de communication et l'unité 122 de sécurisation sont embarqués dans le boîtier 130 unique amovible du terminal portable. Préférentiellement, ce boîtier 130 est configuré pour pouvoir être transporté à la main.

Dans des modes de réalisation préférentiels, tel que celui représenté en figure 1, le périphérique 100 comporte, dans le boîtier 130 amovible, un moyen 135 de localisation du périphérique, le pare-feu 125 étant configuré pour bloquer les paquets reçus lorsque la localisation du périphérique n'est pas comprise dans une zone de localisation prédéterminée.

Le moyen 135 de localisation est, par exemple, une balise mettant en oeuvre le système GPS (pour Global Positioning System, traduit par système de positionnement global). La zone de localisation prédéterminée est inscrite dans une mémoire (non représentée) du périphérique 100 lors de la fabrication du périphérique 100 et éventuellement mise à jour par la connexion du périphérique 100 à un serveur sécurisé (non représenté) du constructeur du périphérique 100.

Dans des modes de réalisation préférentiels, tel que celui représenté en figure 1, le périphérique 100 est configuré pour, lors d'un branchement avec le terminal portable, émettre une commande de désactivation d'un moyen de communication sans-fil du terminal portable.

Cette commande est émise par une unité de calcul du périphérique 100 via le premier moyen 115 de communication.

Dans des modes de réalisation, non représentés, le périphérique 100 comporte un moyen de constitution d'un réseau privé virtuel (traduit de « Virtual Private Network », abrégé VPN) avec un dispositif sur le réseau 105 de données. Ce moyen de constitution est, par exemple, un logiciel embarqué sur une unité de calcul du périphérique 100. Ce moyen de constitution utilise n'importe quel protocole VPN connu, de type OpenVPN, SSTP, L2TP ou IPSEC. Le choix de ce protocole peut être prédéterminé, déterminé par l'utilisateur ou déterminé par le périphérique 100. '

Dans le cas où le protocole est déterminé automatiquement par le périphérique 100, ce périphérique 100 comporte un moyen d'identification d'un type de communication et un moyen d'évaluation de l'environnement du périphérique 100. En fonction de ces données, le périphérique sélectionne un protocole de communication.

On appelle « environnement », le terminal auquel le périphérique 100 est connecté, les réseaux auxquels le périphérique 100 est connecté, la fréquence de connexion à ces réseaux, le type de connexion choisi ou le mode de connexion choisi par exemple. Cet environnement peut être complété par des compléments de données transmis par un serveur et/ou l'utilisateur. Cet environnement permet au périphérique 100 de générer des modèles de facteurs de risques et, préférentiellement, de les améliorer a posteriori via un apprentissage automatique. Le périphérique 100 cumule donc des expériences qui lui sont propres et l'apprentissage automatique, permettant au périphérique 100 de prendre des décisions différentes des décisions prises par un autre périphérique 100.

Ainsi, dans des variantes, la détection d'anomalie est renforcée par un apprentissage automatique de détection d'anomalies, sur le périphérique 100 ou sur un serveur distant connecté au périphérique.

Dans des variantes, le périphérique 100 présente la capacité de changer de protocole en cours de communication si le périphérique 100 détecte des anomalies, via un moyen de détection d'anomalies. En cas de détection d'anomalie grave, représentant un risque d'intrusion, le périphérique 100 interrompt la communication. On appelle ici « anomalie », une situation déterminée comme inhabituelle par le périphérique 100 du point de vue de la sécurité.

Dans des modes de réalisation, tel que celui représenté en figure 1, le périphérique comporte :
- un verrou 145 électronique empêchant la mise en fonctionnement du périphérique et
- un moyen 147 de déverrouillage du verrou 145.

Le moyen de déverrouillage 147 est, par exemple, un système de reconnaissance biométrique, de la rétine ou des empreintes digitales par exemple.

Dans des variantes, le moyen de déverrouillage 147 est une puce de communication selon une technologie de communication sans-fil à champs proche, telles les technologies NFC (pour « Near Field Communication », traduit par Communication en champs proche), Bluetooth (Marque déposée) ou RFID (pour « Radio Frequency Identification », traduit par identification par radio-fréquences).

Dans ces variantes, un dispositif tiers, tel un terminal portable communicant, doit être à proximité du périphérique 100 pour que le périphérique 100 fonctionne. Ce terminal portable communicant émet un signal comportant un mot de passe ou un identifiant correspondant à un mot de passe ou un identifiant enregistré par le verrou 145.

Dans des variantes, le périphérique comporte un verrou logiciel désactivé par la saisie d'un mot de passe sur le terminal et la transmission dudit mot de passe vers le périphérique.

Dans ces variantes, le processus de déverrouillage comporte une étape additionnelle de saisie d'un mot de passe secondaire, transmis à l'utilisateur par via un deuxième moyen de communication, tel un réseau téléphonique cellulaire par exemple, sur le terminal. Un tel mécanisme de double vérification est initié, par exemple, si le mot de passe initial saisi est conforme à un mot de passe de déverrouillage du périphérique. Un tel mécanisme de double vérification est bien connu et déjà employé, par exemple, pour accéder à des services sur le nuage.

Dans des modes de réalisation, le deuxième moyen 120 de communication est configuré pour, lorsqu'une connexion sur le réseau internet est établie :
- identifier le périphérique auprès d'un serveur de données,
- recevoir des fichiers de mise à jour du périphérique, le périphérique étant configuré pour se mettre à jour en fonction des fichiers reçus et
- émettre, en direction du serveur, une information représentative du chemin parcouru par un paquet de données émis par le deuxième moyen de communication pour atteindre le serveur,
le serveur étant configuré pour valider ou invalider la connexion en fonction de l'information de chemin émise.

L'information de chemin correspond, par exemple, à une fonction dite « traceroute » permettant d'identifier la succession de routeurs entre le périphérique et le serveur. Ainsi, si un routeur du chemin correspond à un routeur considéré comme malveillant par le serveur, un identifiant dudit routeur étant stocké dans une table de routeurs interdits, par exemple, la connexion est invalidée.

Dans des modes de réalisation, le deuxième moyen 120 de communication est configuré pour, lorsqu'une connexion sur le réseau internet est validée, établir un tunnel de données entre le serveur et le périphérique.

Ce tunnel de donnée est établi, par exemple, grâce à une connexion VPN (pour « Virtual Private Network », ou réseau privé virtuel).

Dans des modes de réalisation, le boîtier présente un volume inférieur à trente-cinq centimètres cube.

Dans des variantes, le boîtier présente un volume inférieur à cinquante centimètres cube.

Dans des modes de réalisation, le périphérique comporte une batterie 155 d'alimentation des circuits électroniques du périphérique.

Dans des modes de réalisation, les circuits électroniques du périphérique sont configurés pour être alimentés par le premier moyen d'alimentation.

Cette alimentation est réalisée, par exemple, par un bus d'alimentation d'un port USB mis en oeuvre par le deuxième 115 moyen de communication.

Dans des modes de réalisation préférentiels, le périphérique établit la communication entre le terminal communicant et internet de la manière suivante :
- le périphérique est branché au terminal,
- le périphérique adresse une requête d'établissement de communication à un serveur DNS connu du périphérique, cette requête comportant une information de chemin de type « traceroute »,
- le serveur valide la requête et un tunnel est créé entre le serveur et le périphérique et
- le terminal peut accéder à internet via ce tunnel.

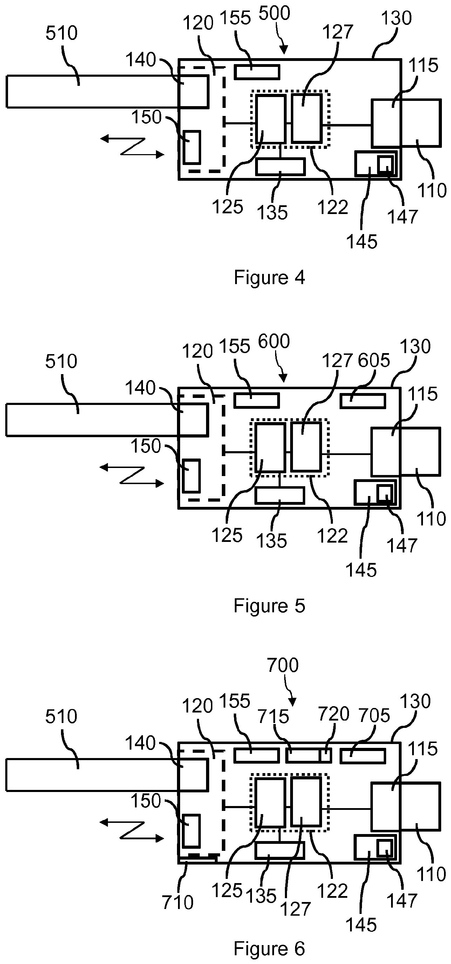

On observe, en figures 4 à 8, d'autres modes de réalisation du périphérique objet de la présente invention.

On observe, en figure 4, un mode de réalisation particulier du périphérique 500 portable de communication avec un périphérique USB, qui comporte :
- un connecteur 110 pour relier mécaniquement et établir une communication filaire, de manière amovible, entre le périphérique et un terminal portable,
- un premier moyen 115 de communication bidirectionnelle filaire avec le terminal portable,
- un deuxième moyen 120 de communication bidirectionnelle avec un périphérique USB, le deuxième moyen de communication comportant un connecteur 510 USB et
- une unité 122 de sécurisation de la communication entre le terminal portable et le périphérique USB, cette communication étant réalisée entre le premier et le deuxième moyens de communication,
les moyens de communication et l'unité de sécurisation étant embarqués dans un boîtier 130 unique amovible du terminal portable.

On entend, par « périphérique utilisant la norme USB », tout dispositif susceptible d'être connecté via un port USB au terminal portable. Ce dispositif peut être :
- un périphérique d'interaction avec l'utilisateur, de type clavier, souris,
- un périphérique de stockage, de type disque dur externe, appareil photo, lecteur multimédia, et clés USB
- un périphérique multimédia et imagerie, de type imprimantes, scanners, cartes son, webcams, tuners TV, écran secondaire ou microphone ou
- un adaptateur de réseau ou de communication.

Dans ce mode de réalisation, l'unité 122 de sécurisation protège des intrusions et des fuites d'information à la manière d'un sas. Ainsi, lors du branchement du périphérique USB au périphérique 500 portable, la fonctionnalité plug & play demeure sans effet car le périphérique portable n'est pas un terminal. À travers le terminal, il est possible d'accéder à l'ensemble du contenu et des fonctionnalités du périphérique USB, en filtrant toutes les communications entre périphérique et terminal.

Le périphérique 500 portable protège fonctionne, par exemple, ainsi :
Une première lecture du périphérique par le terminal 500 lit uniquement l'arborescence et vise uniquement à connaitre le contenu (nom, type, taille, date des fichiers) sans ouvrir ces fichiers. Ceci a pour effet d'annuler toute tentative d'intrusion de la part de malware ou virus situé soit sur le terminal, soit sur le périphérique USB. L'utilisateur est alors libre d'utiliser le périphérique , chaque information transmise par ce périphérique étant analysée par le périphérique 500 de protection.

Dans le cas d'un périphérique USB de stockage, l'utilisateur peut ouvrir, sur son terminal, un explorateur de fichiers contenus dans le périphérique USB. Cet utilisateur peut alors identifier le fichier qu'il souhaite utiliser et faire analyser ce fichier directement sur le périphérique 500 de protection par des outils de vérification (anti-virus anti malwares, code du document...) embarqués ou mis en oeuvre depuis serveur distant. Cette analyse met donc en oeuvre :
- un moyen de sécurisation de contenus transmis par le périphérique USB, tel un logiciel embarqué anti-virus ou anti-malware et/ou
- un moyen de transmission à un serveur comportant un tel moyen de sécurisation.

Une fois validé par l'analyse, l'utilisateur peut le « télécharger » depuis le périphérique 500 vers son terminal et uniquement ce fichier est copié, empêchant toute tentative de la part de malwares ou virus cachés sur le périphérique USB. Pour copier du terminal vers le périphérique USB, le même type de mécanisme d'analyse est mis en oeuvre, préférentiellement. Ceci permet d'appliquer aux fichiers du terminal, et du périphérique , le même degré de protection qui serait utilisé dans un contexte de transmission internet.

L'affichage du contenu du périphérique USB se fait par lecture d'arborescence, pas des contenus des fichiers, comme pour internet. Des informations sont affichées à l'utilisateur, il faut télécharger ces informations pour en voir le contenu. L'affichage des données à l'intérieur du périphérique est réalisé, par exemple, dans un navigateur internet du terminal.

Ainsi, insérer ou retirer un fichier vers ou depuis le périphérique USB est réalisé comme téléchargement ascendant ou descendant d'un fichier depuis internet.

Une fois cette analyse réalisée, le fichier est autorisé par le périphérique 500 à être utilisé sans risque par le terminal et l'utilisateur. Tout ceci vise à vérifier et limiter la dangerosité du fichier avant que celui-ci n'arrive sur le terminal.

On note que toutes les caractéristiques décrites en regard des figures 1 à 3 et 5 à 8 sont compatibles avec ce mode de réalisation.

On observe, en figure 5, un mode de réalisation particulier du périphérique 600 portable de communication avec un périphérique de stockage de données ou avec un réseau 105 de données mettant en oeuvre le protocole internet, qui comporte :
- un connecteur 110 pour relier mécaniquement et établir une communication filaire, de manière amovible, entre le périphérique et un terminal portable,
- un premier moyen 115 de communication bidirectionnelle filaire avec le terminal portable,
- un deuxième moyen 120 de communication bidirectionnelle avec un périphérique de stockage de données ou avec un réseau 105 de données mettant en oeuvre le protocole internet,
- une unité 122 de sécurisation de la communication entre le terminal portable et le périphérique de stockage de données ou le réseau de données, cette communication étant réalisée entre le premier et le deuxième moyens de communication et
- un moyen 605 d'autorisation d'activation du périphérique configuré pour activer le périphérique lorsqu'une information déterminée par le moyen d'autorisation correspond à une information d'autorisation prédéterminée,
les moyens de communication et l'unité de sécurisation étant embarqués dans un boîtier 130 unique amovible du terminal portable.

Dans des modes de réalisation, le moyen d'autorisation 605 met en oeuvre :
- un moyen de saisie d'un mot de passe, tel un clavier ou un écran tactile par exemple,
- une antenne de communication en champ proche ou configurée pour recevoir une information selon la technologie Bluetooth,
- un capteur d'une information biométrique d'un utilisateur et/ou
- le premier moyen de communication pour recevoir un identifiant du terminal portable, de manière à ne fonctionner que si le terminal portable est appairé avec le périphérique par exemple.

On note que toutes les caractéristiques décrites en regard des figures 1 à 4 et 6 à 8 sont compatibles avec ce mode de réalisation.

On observe, en figure 6, un mode de réalisation particulier du périphérique 700 portable de communication avec un périphérique de stockage de données ou avec un réseau 105 de données mettant en oeuvre le protocole internet, qui comporte :
- un connecteur 110 pour relier mécaniquement et établir une communication filaire, de manière amovible, entre le périphérique et un terminal portable,
- un premier moyen 115 de communication bidirectionnelle filaire avec le terminal portable,
- un deuxième moyen 120 de communication bidirectionnelle avec un périphérique de stockage de données ou avec un réseau 105 de données,
- une unité 122 de sécurisation de la communication entre le terminal portable et le périphérique de stockage de données ou le réseau de données, cette communication étant réalisée entre le premier et le deuxième moyens de communication et
- une unité 705 de stockage d'électricité relié à au moins un circuit électronique du périphérique et configuré, lorsque l'électricité est transmise à chaque dit circuit, provoquer la destruction de chaque dit circuit, pour s'assurer d'une réelle destruction des données, par destruction du support, plus efficace qu'un effacement.
les moyens de communication et l'unité de sécurisation étant embarqués dans un boîtier 130 unique amovible du terminal portable.

L'unité de stockage 705 est, par exemple, formé de condensateurs chargés à un voltage supérieur au voltage de fonctionnement des circuits du périphérique, de telle sorte que la libération de cette électricité provoque la destruction des circuits.

Dans des modes de réalisation, l'électricité stockée dans l'unité de stockage 705 est transmise à chaque dit circuit en fonction d'une commande reçue par le deuxième moyen 120 de communication. Cette commande est reçue, par exemple, en lieu de fichiers de mise à jour.

Dans des modes de réalisation, l'électricité stockée dans l'unité de stockage 705 est transmise à chaque dit circuit lorsqu'un moyen 710 de détection d'une anomalie d'intégrité du périphérique déterminer la présence d'une anomalie d'intégrité ou un risque d'intrusion.

Pour déterminer ce risque, le périphérique 700 met en oeuvre, par exemple, un moyen 710 de détection logiciel embarqué détectant un nombre de tentative de décodage ou d'accès au contenu du périphérique protégé par le périphérique 700. Lorsque ce nombre est supérieur à une valeur limite déterminée, sur une période de temps donnée, l'électricité stockée est transmise aux circuits du périphérique protégé.

La détection d'un risque d'intrusion physique, on parle alors de risque d'intégrité, peut également être réalisé par un moyen 710 de détection mécanique, de type interrupteur par exemple, ou optoélectronique, de type capteur par exemple. Ce moyen 710 de détection est préférentiellement noyé dans des résines empêchant tout accès à, et toute détection visuelle, électrique ou électromagnétique, de ces moyens de détection. En effet, la résine peut alors présenter des caractéristiques conçues pour éviter les diffusions électromagnétiques.

La détection d'un risque d'intrusion logique, résultant d'une connexion filaire (USB, Ethernet, par exemple) ou sans-fil (Bluetooth, Wifi, NFC) est évaluée de manière logicielle. Le périphérique 700 comporte ainsi, préférentiellement, un moyen 710 de détection logiciel d'un risque d'intrusion, ce moyen 710 de détection comptant, par exemple, le nombre de tentatives d'accès sur un ou plusieurs ports du périphérique 700 ou le nombre de mots de passe tentés par un dispositif tiers.

Dans des variantes, le moyen 710 de détection comporte à la fois une composante logicielle et une composante mécanique.

Par exemple, le périphérique 700 capte un nombre donné de paramètres de fonctionnement et d'utilisation du périphérique 700. En fonction de ces paramètres, le périphérique 700 est en mesure de déterminer un risque d'intrusion. Cette fonction est, par exemple, du type : lorsqu'au moins un paramètre donné présente une valeur déterminée sur une durée déterminée, un risque d'intrusion est détecté. Le moyen de détermination d'un risque d'intrusion peut être renforcé d'algorithmes d'apprentissage automatique.

Le moyen de détermination de risque d'intrusion capte, par exemple, les points d'accès de communication et le serveur auquel se connecte le périphérique 700. Préférentiellement, le périphérique 700 mémorise ces évènements capturés, et accumule de l'expérience en plus des paramètres de fonctionnement et d'utilisation et des limites déterminées comme acceptable pour le périphérique 700. Aussi, initialement le périphérique 700 peut être couple avec un ou des terminaux de confiance, ainsi qu'un ou des environnements qu'il enregistre puis la mémorisation successive effectuée lui permet de constituer une base de références de situations, ce qui permet au fil du temps d'améliorer son expérience hors-ligne. En effet, en ligne, le périphérique 700 est connecté à un serveur et ce serveur peut le périphérique 700 à choisir ses réponses sécuritaires, en fonction de paramètres de fonctionnement captés et transmis au serveur, jusqu'à l'autodestruction du périphérique 700.

En fonction d'une fréquence, insistance ou degré, le périphérique 700 met en oeuvre des contre-mesures déterminées. Ces contre-mesures sont, par exemple :
- la fermeture d'au moins un canal de communication avec le dispositif tiers,
- l'émission d'une alerte sonore ou visuelle, sur le périphérique 700 ou sur un terminal, correspondant à la détection d'un risque d'intrusion et/ou
- l'émission d'une alerte à destination d'un serveur distant correspondant à la détection d'un risque d'intrusion, le serveur pouvant renvoyer, en réponse, une commande d'action de la part du périphérique 700.

Si le périphérique détecte que la tentative d'intrusion se poursuit depuis une première durée déterminée et sans contre-commande de la part du serveur ou d'un utilisateur, le périphérique 700 efface les informations contenues dans sa mémoire. Si le périphérique détecte que la tentative d'intrusion se poursuit depuis une deuxième durée déterminée, supérieure à la première valeur déterminée, et sans contre-commande de la part du serveur ou d'un utilisateur, le périphérique 700 relâche le courant électrique de l'unité 705 de stockage à destination du processeur ou d'une mémoire du périphérique 700, voire du dispositif tiers connecté au périphérique 700.

Ainsi, dans des modes de réalisation, lors de la détection d'une première anomalie, le périphérique 700 est désactivé logiquement et, lors de la détection d'une deuxième anomalie, ultérieure à la première anomalie dans le temps, l'électricité stockée dans l'unité de stockage 705 est transmise à chaque circuit électronique du périphérique 700 à détruire.

En plus de ces modes de réalisation, l'électricité stockée peut également être transmise au dispositif émettant les requêtes d'accès au périphérique protégé, de sorte à griller les circuits dudit dispositif.

Dans des modes de réalisation, l'électricité stockée dans l'unité de stockage 705 est transmise à chaque dit circuit lorsqu'un moyen 710 de détection d'une anomalie d'intégrité du périphérique déterminer la présence d'une anomalie d'intégrité.

Cette anomalie d'intégrité est, par exemple, la détection d'une ouverture du boîtier par un utilisateur. Le moyen de détection 710 est, alors, par exemple, un interrupteur. Une autre anomalie d'intégrité est, par exemple, le contact d'un circuit avec un objet tiers, par mesure de courants électriques ou de champs électromagnétiques par le moyen de détection 710 par exemple. On note que toutes les caractéristiques décrites en regard des figures 1 à 5 et 7 à 8 sont compatibles avec ce mode de réalisation.

Dans des modes de réalisation, le périphérique 700 comporte une mémoire 715 d'informations chiffrées.

Dans des modes de réalisation, le périphérique 700 comporte un moyen 720 de déchiffrement des informations mémorisées par la mémoire 715 en fonction d'une clé de déchiffrement.

Ce moyen 720 de déchiffrement est, par exemple, un logiciel embarqué.

Dans des modes de réalisation, le périphérique 700 comporte un moyen 115 de réception d'une clé de déchiffrement provenant du terminal. Ce moyen 115 de réception est, par exemple, constitué de la liaison filaire reliant le périphérique 700 au terminal.

Dans des modes de réalisation, le périphérique 700 comporte un moyen 120 de réception d'une clé de déchiffrement provenant d'un serveur distant. Ce moyen 120 de réception est, par exemple, constitué de la liaison sans-fil reliant le périphérique 700 à internet.

Dans des modes de réalisation, le périphérique 700 comporte un moyen, 115 et 120, de réception d'une première clé de déchiffrement provenant du terminal et d'une deuxième clé de déchiffrement provenant d'un serveur distant, un moyen 720 d'assemblage des deux clés pour former une clé de déchiffrement composite mise en oeuvre par le moyen de déchiffrement.

Le moyen d'assemblage 720 est, par exemple, un logiciel embarqué. Dans des variantes, chaque clé déchiffre une partie différente des données. Dans d'autres variantes, les deux clés sont utilisées alternativement pour déchiffrer les données.

Dans des modes de réalisation, le périphérique 700 comporte un moyen 135 de localisation du périphérique, le moyen 720 de déchiffrement étant configuré pour fonctionner en fonction de l'information de localisation fournie par le moyen de localisation et d'une donnée de localisation associée aux données stockées dans la mémoire 715.

Dans des modes de réalisation, le moyen 720 de déchiffrement est configuré pour fonctionner en fonction d'une information d'horloge du périphérique et d'une donnée de temporalité d'accès associée aux données stockées dans la mémoire 715.

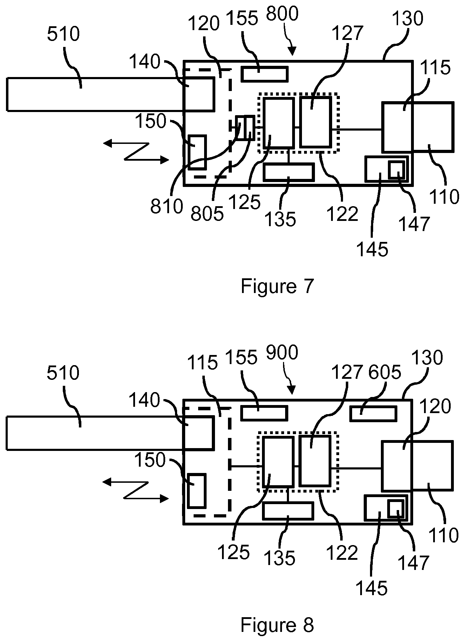

On observe, en figure 7, un mode de réalisation particulier du périphérique 800 portable de communication avec un périphérique de stockage de données ou avec un réseau 105 de données mettant en oeuvre le protocole internet, qui comporte :
- un connecteur 110 pour relier mécaniquement et établir une communication filaire, de manière amovible, entre le périphérique et un terminal portable,
- un premier moyen 115 de communication bidirectionnelle filaire avec le terminal portable,
- un deuxième moyen 120 de communication bidirectionnelle avec un périphérique de stockage de données ou avec un réseau de données,
- une unité 122 de sécurisation de la communication entre le terminal portable et le périphérique de stockage de données ou le réseau de données, cette communication étant réalisée entre le premier et le deuxième moyens de communication, l'unité de sécurisation 122 comportant un moyen 805 de chiffrement des données étant émises par le deuxième moyen de communication et un moyen 810 de déchiffrement des données reçues par le deuxième moyen de communication et
les moyens de communication et l'unité de sécurisation étant embarqués dans un boîtier 130 unique amovible du terminal portable.

Dans des variantes, le périphérique comporte une mémoire de stockage de données en lieu, ou en complément, des moyens de chiffrement 805 et de déchiffrement 810.

Dans des modes de réalisation, les données stockées dans la mémoire sont effacées lors de la réception d'une commande de suppression. Cette commande est reçue, par exemple, en lieu de fichiers de mise à jour.

Dans des modes de réalisation, les données stockées dans la mémoire sont effacées lorsque le périphérique 800 détermine qu'un risque d'intrusion est trop important. Pour déterminer ce risque, le périphérique 800 met en oeuvre, par exemple, un logiciel embarqué détectant un nombre de tentative de décodage ou d'accès au contenu du périphérique protégé par le périphérique 800. Lorsque ce nombre est supérieur à une valeur limite déterminée, sur une période de temps donnée, les données sont effacées.

Dans ces variantes, les données stockées peuvent être encodées par le périphérique 800 directement, par la mise en oeuvre d'un moyen d'encodage logiciel par exemple, ou en amont du stockage sur le périphérique 800. Si ces données sont encodées, la clé de décodage peut être indisponible au niveau du périphérique 800 et être, à la place, stockée sur un serveur distant. L'accès aux données est alors conditionné à l'accès au serveur distant et, ainsi, à une étape d'authentification auprès du serveur.

Ainsi lors de l'enregistrement de données sur le périphérique 800, l'utilisateur peut créer des contraintes d'accès à ces données : mot de passe supplémentaire, double identification matérielle (NFC) mais aussi contraindre tout utilisateur à se connecter pour déchiffrer ces données. Dans ces variantes, une partie de la clé de chiffrement des données peut être déchiffrée uniquement à partir d'un serveur distant.

Dans ces variantes, la clé de chiffrement est incomplète, donc le périphérique 800 a besoin d'être connecté et sécurisé pour pouvoir récupérer la partie manquante de la clé pour déchiffrer le contenu en mémoire du périphérique 800. Préférentiellement, le périphérique 800 efface la clé dès le déchiffrement réalisé, les informations déchiffrées restant accessibles le temps de la session, la fermeture de session reverrouillant les données et nécessitant un nouveau processus de connexion pour récupérer une autre partie de clé.

En plus de cette condition d'authentification, des restrictions d'espace et/ou de temps peuvent être employées, telles que décrites en regard de la figure 1. Ainsi, par exemple, le dispositif 800 est susceptible de comporter un moyen de géolocalisation (non représenté).

Le moyen de chiffrement 805 et le moyen de déchiffrement 810 sont, par exemple, des circuits électroniques configurés pour, en fonction d'une clé de chiffrement, chiffrer ou déchiffrer des données. La clé de chiffrement peut être, par exemple, une clé d'un couple clé privée / clé publique partagée avec le serveur.

On note que toutes les caractéristiques décrites en regard des figures 1 à 6 et 8 sont compatibles avec ce mode de réalisation.

On observe, en figure 8, un mode de réalisation particulier du périphérique 900 portable de communication avec un périphérique de stockage de données ou avec un réseau 105 de données mettant en oeuvre le protocole internet, qui comporte :
- un connecteur 110 pour relier mécaniquement et établir une communication filaire, de manière amovible, entre le périphérique et un terminal portable,
- un premier moyen 115 de communication bidirectionnelle filaire avec le terminal portable,
- un deuxième moyen 120 de communication bidirectionnelle avec un périphérique de stockage de données,
- une unité 122 de sécurisation de la communication entre le terminal portable et le périphérique de stockage de données ou le réseau de données, cette communication étant réalisée entre le premier et le deuxième moyens de communication, les données étant émises par le deuxième moyen de communication étant associées à un identifiant sur une chaine de blocs, cet identifiant étant généré en fonction d'identifiants de composants électroniques du périphériques et d'un identifiant unique prédéterminé, et
les moyens de communication et l'unité de sécurisation étant embarqués dans un boîtier 130 unique amovible du terminal portable.

On note que toutes les caractéristiques décrites en regard des figures 1 à 7 sont compatibles avec ce mode de réalisation
Pour former l'identifiant sur la chaine de blocs, on procède ainsi : chaque composant électronique du périphérique 900 présente un identifiant unique défini par le constructeur dudit composant. Ces identifiants sont récupérés à l'initialisation du périphérique 900, soit par le périphérique 900, soit par un dispositif d'assemblage du périphérique 900. L'ensemble de ces identifiants uniques est utilisé par un serveur pour générer un identifiant unique de périphérique 900. Un système d'exploitation est ensuite installé sur le périphérique 900, ce système d'exploitation étant associé à un identifiant unique généré par un serveur. Cette paire d'identifiants uniques sert à générer une clé, au niveau du périphérique 900, qui fait partie d'un bloc qui sera intégré à la chaine de blocs avec son serveur et autres périphériques 900 similaires. Chaque nouveau périphérique 900 rejoint ainsi sa chaine de blocs, donc quand un périphérique 900 se connecte au serveur il est identifié par le serveur et les autres périphériques 900 avant d'avoir droit de pouvoir opérer totalement.

Le périphérique 900 comporte préférentiellement des protocoles de surveillance, d'archivage ainsi qu'un logiciel d'apprentissage automatisé pour apprendre la différence entre erreur de saisie de mot de passe et des tentatives multiples et insistantes d'accès et aucune réponse de la part de l'utilisateur à ses sollicitations (réponse à une alerte, réponse à une question sécurité (semblable aux codes PIN & PUK) dans un laps de temps).

Si le périphérique 900 détecte et interprète une absence de l'utilisateur, le périphérique 900 entame préférentiellement une procédure de protection (effacement des données) puis destruction par décharge électrique des composants vitaux (mémoire et processeur) puis éventuellement décharge vers les ports USB ou Ethernet qui sont utilisés un dispositif tiers, pirate.

On observe, sur la figure 2, une vue schématique d'un mode de réalisation du système 200 objet de la présente invention. Ce système 200 de protection d'un terminal portable contre les intrusions, comporte :
- un périphérique 100 tel que décrit en regard d'une des figures 1 à 8 et
- le terminal 300 portable, relié de manière filaire au périphérique 100.

La liaison entre le périphérique 100 et le terminal 300 portable est assurée, par exemple, au moyen d'une connectique compatible avec la norme USB, le périphérique 100 comportant une prise USB mâle et le terminal 300 comportant une prise USB femelle.

Dans des modes de réalisation préférentiels, tel que celui représenté en figure 2, le terminal 300 portable est configuré pour désactiver au moins un moyen 305 de communication sans-fil avec le réseau 105 de données lorsque le périphérique est relié au terminal portable.

Le moyen 305 de communication est, par exemple, une antenne configurée pour communiquer selon le standard Wi-Fi. La désactivation de cette antenne entraîne la nécessité de communiquer avec le réseau 105 de données via le périphérique 100. De cette manière, la communication entre le terminal 300 portable et le réseau 105 de donnée est sécurisée dès que le périphérique 100 est branché au terminal 300.

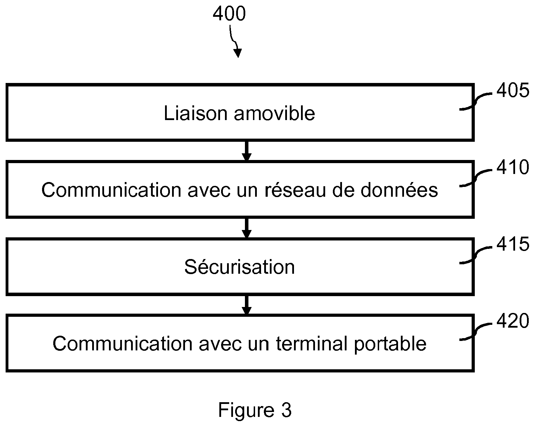

On observe, sur la figure 3, un logigramme d'étapes particulier du procédé 400 objet de la présente invention. Ce procédé 400 de communication avec un réseau de données mettant en oeuvre le protocole internet comporte :
- une étape 405 de liaison amovible à un terminal portable du boîtier amovible d'un périphérique tel que décrit en regard d'une des figures 1 à 8, établissant une communication filaire entre le boîtier et le terminal portable,
- une première étape 410 de communication bidirectionnelle, par le périphérique, avec le réseau de données,
- une étape 415 de sécurisation de la communication entre le terminal portable et le réseau de données et
- une deuxième étape 420 de communication bidirectionnelle filaire avec le terminal portable des paquets non filtrés par le pare feu.

Ce procédé 400 est réalisé, par exemple, par la mise en oeuvre du périphérique 100 objet de la présente invention.

Préférentiellement, en amont du procédé 400, toutes les connexions du terminal portable au réseau de données sont désactivées, par mise en mode avion, par exemple. Dans des variantes, le terminal désactive toutes ces connexions lors du branchement du périphérique au terminal.

Lors du branchement du périphérique, le périphérique scanne les points d'accès au réseau de données si ce périphérique met en oeuvre un premier moyen de communication sans-fil.

Chaque point d'accès au réseau est affiché sur le terminal portable, dans un navigateur internet par exemple. Lorsque l'utilisateur sélectionne l'un de ces points d'accès, le périphérique se connecte au point d'accès correspondant.

Dans des variantes, l'activation du périphérique nécessite la saisie d'un identifiant et d'un mot de passe sur le terminal portable.

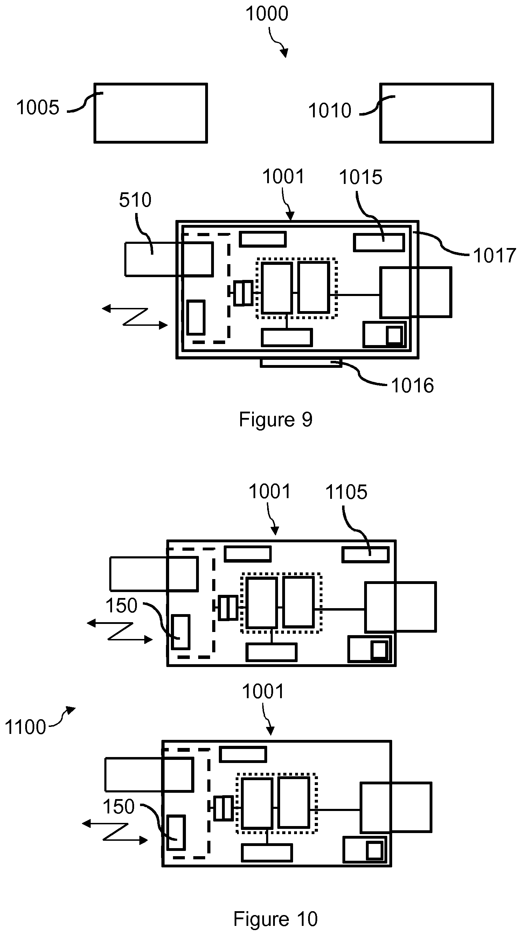

On observe, en figure 9, schématiquement, un mode de réalisation particulier d'un système 1000 de communication objet de la présente invention. Ce système 1000 de communication comporte :
- au moins un périphérique 1001, tel que décrit en regard d'une des figures 1 à 8, comportant un moyen 510 de communication avec un serveur distant,
- un serveur 1005 de fourniture configuré pour être appairé avec au moins un dit périphérique et pour fournir, à chaque dit périphérique, au moins une information représentative d'au moins une information de connexion à un serveur de communication et
- un serveur 1010 de communication configuré pour être connecté avec chaque dit périphérique en fonction d'au moins une information de communication communiquée par chaque dit périphérique.

Le serveur 1005 de fourniture est préférentiellement configuré pour fournir au moins un élément parmi :
- un identifiant de connexion,
- un protocole de chiffrement,
- une attribution d'un utilisateur,
- une base de connaissance, incluant par exemple, un identifiant de serveur DNS ou des codes de connexion internes à une organisation,
- une valeur de bloc dans une chaine de blocs et/ou
- un chemin vers un serveur cible de communication.

Le périphérique 1001 peut correspondre à tout type de périphérique illustré en regard des figures 1 à 8.

Dans des modes de réalisation particuliers, le serveur 1005 de fourniture et le serveur 1010 de communication sont confondus.

Dans des modes de réalisation particuliers, le serveur 1005 de fourniture est hors-ligne, c'est-à-dire déconnecté de tout réseau de données.

Comme on le comprend, pour fonctionner, le périphérique 1001 est connecté au serveur 1005 de fourniture et reçoit des informations lui permettant de se connecter au serveur 1010 de communication. Ceci permet au détenteur du serveur 1005 de fourniture de contrôler à partir d'un point unique, ou d'une pluralité de tels serveurs 1005 de fourniture, un ensemble de périphériques 1001.

Dans des modes de réalisation, le périphérique comporte un moyen 1016 de fixation à un écran de terminal. Ce moyen 1016 de fixation est, par exemple, un aimant. Tout autre moyen 1016 de fixation mécanique ou magnétique.

On observe, en figure 10, schématiquement, un mode de réalisation particulier d'un système 1100 de communication objet de la présente invention. Ce système 1100 de communication entre périphériques 1001 tels que décrits en regard d'une des figures 1 à 8 comporte :
- au moins deux périphériques 1001 tels que décrits en regard d'une des figures 1 à 8, chaque dit périphérique comportant un moyen 150 de communication avec un autre périphérique 1001 et
- au moins un moyen 1105 d'attribution d'accès à au moins une ressource d'un périphérique par au moins un autre périphérique.

Le moyen 150 de communication est, par exemple, formé d'une antenne configurée pour communiquer sur un réseau sans-fil, tel un réseau wifi ou Bluetooth.

Le moyen 1105 d'attribution est, par exemple, un circuit électronique associé à un logiciel d'un terminal connecté à un périphérique 1001 et permettant l'accès ou non à une ressource dudit périphérique. Cet accès est d'ordre logique et déverrouillé par l'action d'un utilisateur.

Dans des modes de réalisation, le moyen 1105 d'attribution autorise l'accès au moins un fichier enregistré sur le périphérique 1001.

Dans des modes de réalisation, le moyen 1105 d'attribution confère des droits d'administration d'au moins un fichier enregistré sur le périphérique 1001 à au moins un autre périphérique 1001. Ces droits d'administration correspondent, par exemple, à un droit d'écrire, de lire et/ou de supprimer.

Dans des modes de réalisation, le moyen 1105 d'attribution est configuré pour créer un tunnel informatique d'un périphérique 1001 vers un autre périphérique 1001. On rappelle qu'un tunnel, dans le contexte de réseaux informatiques, est une encapsulation de données d'un protocole réseau dans un autre, situé dans la même couche du modèle en couches, ou dans une couche de niveau supérieur.

Préférentiellement, le tunnel est chiffré, par exemple par le protocole SSH.

Dans des modes de réalisation, au moins un périphérique 1001 est enregistré sur une chaine de blocs.

Dans des modes de réalisation, le moyen 1105 d'attribution est configuré pour partager une connexion d'un périphérique 1001 vers un autre périphérique 1001. Ce mécanisme est analogue au partage de connexion trouvé dans les téléphones portables.

Dans des variantes d'un des modes de réalisation particuliers représentés en figures 1 à 10, au moins un boîtier 1001 comporte une base d'identifiants et de mots de passe de points d'accès à un réseau de données. Ceci permet de réaliser une connexion directe à des points d'accès wifi, par exemple, sans intervention de l'utilisateur.

Dans des modes de réalisation, au moins un périphérique est configuré pour être connecté à au moins un dispositif tiers et pour relayer des informations émises par ce dispositif vers un serveur distant.

Ainsi, le périphérique est connecté à un dispositif préférentiellement autonome tel un dispositif de contrôle d'accès à un site ou un système de contrôle tels que capteurs ou de caméras.

Le périphérique peut centraliser les communications d'autres dispositifs puis sécuriser l'ensemble des données pour envoi vers serveur pour conserver une architecture de séparation physique de matériel :
- d'une part la partie serveur pour la sécurisation et
- d'autre part la partie utilisateur, formée par exemple d'un poste de travail, d'un terminal gérant de la donnée, tel un terminal identification, de saisie, d'acquisition de données ou un digicode, un lecteur d'empreinte ou de rétine.

Dans des modes de réalisation, le périphérique comporte un moyen de fixation à un écran de terminal. Dans des variantes, ce moyen de fixation est un aimant.

Dans des modes de réalisation, le périphérique est embarqué dans une coque de téléphone portable ou de tablette numérique.

## Revendications

1. Périphérique (700) portable de communication avec un réseau (105) de données mettant en oeuvre le protocole internet, qui comporte :
- un connecteur (110) pour relier mécaniquement et établir une communication filaire, de manière amovible, entre le périphérique et un terminal portable,
- un premier moyen (115) de communication bidirectionnelle filaire avec le terminal portable,
- un deuxième moyen (120) de communication bidirectionnelle avec le réseau (105) de données,
- une unité (122) de sécurisation de la communication entre le terminal portable et le réseau de données, cette communication étant réalisée entre le premier et le deuxième moyens de communication et
- une unité (705) de stockage d'électricité reliée à au moins un circuit électronique du périphérique et configurée pour, lorsque l'électricité est transmise à chaque dit circuit, provoquer la destruction de chaque dit circuit
et dans lequel l'électricité stockée dans l'unité de stockage (705) est transmise à chaque dit circuit lorsque sur le périphérique, un moyen (710) de détection d'une anomalie d'intégrité du périphérique détermine la présence d'une anomalie d'intégrité logique,
dans lequel le moyen de détection d'anomalie (710) est renforcé par un algorithme d'apprentissage automatique de détection d'anomalies, sur le périphérique et dans lequel lors de la détection d'une première anomalie, le périphérique (700) est désactivé logiquement et, lors de la détection d'une deuxième anomalie, ultérieure à la première anomalie dans le temps, l'électricité stockée dans l'unité de stockage (705) est transmise à chaque circuit électronique du périphérique (700) à détruire.

2. Périphérique (700) selon la revendication 1, dans lequel le moyen de détection (710) est un moyen de détection logiciel embarqué détectant un nombre de tentative de décodage ou d'accès au contenu du périphérique protégé par le périphérique (700).

3. Périphérique (700) selon l'une des revendications 1 ou 2, qui comporte une mémoire (715) d'informations chiffrées et un moyen (720) de déchiffrement des informations mémorisées par la mémoire (715) en fonction d'une clé de déchiffrement.

4. Périphérique (700) selon la revendication 3, qui comporte un moyen (135) de localisation du périphérique, le moyen (720) de déchiffrement étant configuré pour fonctionner en fonction de l'information de localisation fournie par le moyen de localisation et d'une donnée de localisation associée aux données stockées dans la mémoire (715).

5. Périphérique (700) selon l'une des revendications 3 ou 4, dans lequel le moyen (720) de déchiffrement est configuré pour fonctionner en fonction d'une information d'horloge du périphérique et d'une donnée de temporalité d'accès associée aux données stockées dans la mémoire (715).

6. Périphérique (700) selon l'une des revendications 1 à 5, dans lequel l'unité (122) de sécurisation de la communication entre le terminal portable et le réseau de données, comporte un système (127) de gestion de DNS autonome, les moyens de communication et l'unité de sécurisation étant embarqués dans un boîtier (130) unique amovible du terminal portable.

7. Périphérique (700) selon la revendication 6, dans lequel l'unité (122) de sécurisation comporte un pare-feu (125) filtrant des paquets, reçus du réseau de données et destinés au terminal portable, comportant une unité de calcul configurée pour exécuter un logiciel de pare-feu.

8. Périphérique (700) selon l'une des revendications 6 ou 7, configuré pour, lors d'un branchement avec le terminal portable, émettre une commande de désactivation d'un moyen de communication sans-fil du terminal portable.

9. Périphérique (700) selon l'une des revendications 6 à 8, qui comporte un verrou (145) électronique empêchant la mise en fonctionnement du périphérique et un moyen (147) de déverrouillage du verrou.

10. Périphérique (700) selon l'une des revendications 6 à 9, dans lequel le deuxième moyen (120) de communication est configuré pour, lorsqu'une connexion sur le réseau internet est établie :
- identifier le périphérique auprès d'un serveur de données,
- recevoir des fichiers de mise à jour du périphérique, le périphérique étant configuré pour se mettre à jour en fonction des fichiers reçus et
- émettre, en direction du serveur, une information représentative du chemin parcouru par un paquet de données émis par le deuxième moyen de communication pour atteindre le serveur,
le serveur étant configuré pour valider ou invalider la connexion en fonction de l'information de chemin émise.

11. Périphérique (700) selon l'une des revendications 1 à 10, qui comporte un moyen (605) d'autorisation d'activation du périphérique configuré pour activer le périphérique lorsqu'une information déterminée par le moyen d'autorisation correspond à une information d'autorisation prédéterminée.

12. Périphérique (700) selon la revendication 11, dans lequel le moyen d'autorisation (605) met en oeuvre :
- un moyen de saisie d'un mot de passe,
- une antenne de communication en champ proche ou configurée pour recevoir une information selon la technologie Bluetooth,
- un capteur d'une information biométrique d'un utilisateur et/ou
- le premier moyen de communication pour recevoir un identifiant du terminal portable.

13. Procédé (400) de communication avec un réseau de données mettant en oeuvre le protocole internet, qui comporte :
- une étape (405) de liaison amovible à un terminal portable du boîtier amovible d'un périphérique selon l'une des revendications 1 à 12, par un connecteur du périphérique établissant une communication filaire entre le boîtier et le terminal portable,
- une première étape (410) de communication bidirectionnelle, par le périphérique, avec le réseau de données,
- une étape (415) de sécurisation, par le périphérique, de la communication entre le terminal portable et le réseau de données et
- une deuxième étape (420) de communication bidirectionnelle filaire, par le périphérique, avec le terminal portable des paquets non filtrés par un pare-feu du périphérique,
- une étape de détection, par le périphérique, de la présente d'une anomalie logique d'intégrité du périphérique
- une étape de stockage d'électricité par une unité de stockage d'électricité du périphérique reliée à au moins un circuit électronique du périphérique et configurée pour, lorsque l'électricité est transmise à chaque dit circuit, provoquer la destruction de chaque dit circuit,
- une étape de transmission de l'électricité stockée à chaque dit circuit lorsque la présence d'une anomalie d'intégrité logique est détectée par le périphérique,
**caractérisé en ce que** l'étape de détection d'anomalies ; sur le périphérique, est renforcée par un algorithme d'apprentissage automatique de détection d'anomalies, sur le périphérique, dans lequel dans lequel lors de la détection d'une première anomalie, le périphérique est désactivé logiquement et, lors de la détection d'une deuxième anomalie, ultérieure à la première anomalie dans le temps, l'électricité stockée dans l'unité de stockage est transmise à chaque circuit électronique du périphérique à détruire.

## Patentansprüche

1. Tragbares Peripheriegerät (700) zur Kommunikation mit einem Datennetzwerk (105), das ein Internetprotokoll verwendet, das aufweist:
- einen Verbinder (110) zum lösbaren mechanischen Verbinden und Herstellen einer drahtgebundenen Kommunikation zwischen dem Peripheriegerät und einem tragbaren Endgerät,
- ein erstes Mittel (115) zur drahtgebundenen bidirektionalen Kommunikation mit dem tragbaren Endgerät,
- ein zweites Mittel (120) zur bidirektionalen Kommunikation mit dem Datennetzwerk (105),
- eine Einheit (122) zur Sicherung der Kommunikation zwischen dem tragbaren Endgerät und dem Datennetzwerk, wobei diese Kommunikation zwischen dem ersten und dem zweiten Kommunikationsmittel erfolgt und
- eine Stromspeichereinheit (705), die mit wenigstens einem elektronischen Schaltkreis des Peripheriegeräts verbunden und ausgelegt ist, um, wenn der Strom an jeden Schaltkreis übertragen wird, die Zerstörung jedes Schaltkreises zu bewirken,
und wobei der in der Speichereinheit (705) gespeicherte Strom an jeden Schaltkreis übertragen wird, wenn am Peripheriegerät ein Mittel (710) zur Erkennung einer Integritätsanomalie des Peripheriegeräts das Vorhandensein einer logischen Integritätsanomalie feststellt,
wobei das Anomalieerkennungsmittel (710) durch einen automatischen Lernalgorithmus zur Anomalieerkennung am Peripheriegerät verstärkt wird und wobei bei der Erkennung einer ersten Anomalie das Peripheriegerät (700) logisch deaktiviert wird und bei der Erkennung einer zweiten Anomalie, die zeitlich nach der ersten Anomalie liegt, der in der Speichereinheit (705) gespeicherte Strom an jeden zu zerstörenden elektronischen Schaltkreis des Peripheriegeräts (700) übertragen wird.

2. Peripheriegerät (700) nach Anspruch 1, wobei das Erkennungsmittel (710) ein eingebautes Software-Erkennungsmittel ist, das eine Anzahl von Entschlüsselungs- oder Zugriffsversuchen auf den Inhalt des durch das Peripheriegerät (700) geschützten Peripheriegeräts erkennt.

3. Peripheriegerät (700) nach einem der Ansprüche 1 oder 2, das einen Speicher (715) mit verschlüsselten Informationen und ein Mittel (720) zum Entschlüsseln der vom Speicher (715) gespeicherten Informationen in Abhängigkeit von einem Entschlüsselungsschlüssel umfasst.

4. Peripheriegerät (700) nach Anspruch 3, das ein Mittel (135) zur Lokalisierung des Peripheriegeräts umfasst, wobei das Entschlüsselungsmittel (720) ausgelegt ist, um in Abhängigkeit von der von dem Lokalisierungsmittel bereitgestellten Lokalisierungsinformation und einer mit den im Speicher (715) gespeicherten Daten verbundenen Lokalisierungsangabe zu arbeiten.

5. Peripheriegerät (700) nach einem der Ansprüche 3 oder 4, wobei das Entschlüsselungsmittel (720) ausgelegt ist, um in Abhängigkeit von einer Zeitinformation des Peripheriegeräts und einer mit den im Speicher (715) gespeicherten Daten verbundenen Zugriffszeitangabe zu arbeiten.

6. Peripheriegerät (700) nach einem der Ansprüche 1 bis 5, wobei die Einheit (122) zur Sicherung der Kommunikation zwischen dem tragbaren Endgerät und dem Datennetzwerk ein eigenständiges DNS-Verwaltungssystem (127) umfasst, wobei die Kommunikationsmittel und die Sicherungseinheit in einem einzigen, vom tragbaren Endgerät abnehmbaren Gehäuse (130) untergebracht sind.

7. Peripheriegerät (700) nach Anspruch 6, wobei die Sicherungseinheit (122) eine Firewall (125) aufweist, die Pakete filtert, die vom Datennetzwerk empfangen und für das tragbare Endgerät bestimmt sind, aufweisend eine Recheneinheit, die zum Ausführen einer Firewall-Software ausgelegt ist.

8. Peripheriegerät (700) nach einem der Ansprüche 6 oder 7, das ausgelegt ist, um bei einem Anschluss an ein tragbares Endgerät einen Befehl zur Deaktivierung eines drahtlosen Kommunikationsmittels des tragbaren Endgeräts zu senden.

9. Peripheriegerät (700) nach einem der Ansprüche 6 bis 8, das eine elektronische Verriegelung (145) zum Verhindern des Einschaltens des Peripheriegeräts und ein Mittel (147) zum Entriegeln der Verriegelung aufweist.

10. Peripheriegerät (700) nach einem der Ansprüche 6 bis 9, wobei das zweite Kommunikationsmittel (120) ausgelegt ist, um, wenn eine Verbindung zum Internetnetzwerk hergestellt wird:
- das Peripheriegerät bei einem Datenserver zu identifizieren,
- Update-Dateien für das Peripheriegerät zu empfangen, wobei das Peripheriegerät ausgelegt ist, um sich in Abhängigkeit von den empfangenen Dateien zu aktualisieren und
- in Richtung des Servers eine Information zu senden, die den Weg repräsentiert, den ein vom zweiten Kommunikationsmittel gesendetes Datenpaket zurücklegt, um den Server zu erreichen,
wobei der Server ausgelegt ist, um die Verbindung in Abhängigkeit von der gesendeten Pfadinformation zu validieren oder abzulehnen.

11. Peripheriegerät (700) nach einem der Ansprüche 1 bis 10, das ein Mittel (605) zur Autorisierung der Aktivierung des Peripheriegeräts umfasst, das ausgelegt ist, um das Peripheriegerät zu aktivieren, wenn eine durch das Autorisierungsmittel bestimmte Information einer vorbestimmten Autorisierungsinformation entspricht.

12. Peripheriegerät (700) nach Anspruch 11, wobei das Autorisierungsmittel (605) umfasst:
- ein Mittel zur Eingabe eines Passworts,
- eine Nahfeldkommunikationsantenne oder eine Antenne, die ausgelegt ist, um eine Information gemäß der Bluetooth-Technologie zu empfangen,
- einen Sensor für eine biometrische Informationen eines Benutzers und/oder
- das erste Kommunikationsmittel, um eine Kennung des tragbaren Endgeräts zu empfangen.

13. Verfahren (400) zur Kommunikation mit einem Datennetzwerk, das das Internetprotokoll verwendet, das aufweist:
- einen Schritt (405) des lösbaren Verbindens mit einem tragbaren Endgerät des beweglichen Gehäuses eines Peripheriegeräts nach einem der Ansprüche 1 bis 12 durch einen Verbinder des Peripheriegeräts, der eine drahtgebundene Kommunikation zwischen dem Gehäuse und dem tragbaren Endgerät herstellt,
- einen ersten Schritt (410) der bidirektionalen Kommunikation durch das Peripheriegerät mit dem Datennetzwerk,
- einen Schritt (415) des Sicherns der Kommunikation zwischen dem tragbaren Endgerät und dem Datennetzwerk durch das Peripheriegerät und
- einen zweiten Schritt (420) der drahtgebundenen bidirektionalen Kommunikation durch das Peripheriegerät mit dem tragbaren Endgerät der nicht durch eine Firewall des Peripheriegeräts gefilterten Pakete,
- ein Schritt zum Erkennen des Vorhandenseins einer logischen Integritätsanomalie des Peripheriegeräts durch das Peripheriegerät,
- einen Schritt des Speicherns von Strom durch eine Stromsspeichereinheit des Peripheriegeräts, die mit wenigstens einem elektronischen Schaltkreis des Peripheriegeräts verbunden und ausgelegt ist, um, wenn der Strom an jeden Schaltkreis übertragen wird, die Zerstörung jedes dieser Schaltkreise zu bewirken,
- einen Schritt des Übertragens des gespeicherten Stroms an jeden Schaltkreis, wenn das Vorhandensein einer logischen Integritätsanomalie vom Peripheriegerät erkannt wird,
**dadurch gekennzeichnet, dass** der Schritt des Erkennens von Anomalien am Peripheriegerät durch einen automatischen Lernalgorithmus zur Anomalieerkennung am Peripheriegerät verstärkt wird, wobei bei der Erkennung einer ersten Anomalie das Peripheriegerät logisch deaktiviert wird und bei der Erkennung einer zweiten Anomalie, die zeitlich nach der ersten Anomalie liegt, der in der Speichereinheit gespeicherte Strom an jeden zu zerstörenden elektronischen Schaltkreis des Peripheriegeräts übertragen wird.

## Claims

1. Portable peripheral (700) for communication with a data network (105) utilising the internet protocol, which peripheral comprises:
- a connector (110) for mechanically connecting and establishing a wired communication, in a detachable manner, between the peripheral and a mobile terminal;
- a first means (115) for two-way wired communication with the mobile terminal;
- a second means (120) for two-way communication with the data network (105);
- a unit (122) for securing communication between the mobile terminal and the data network, this communication being carried out between the first and second communication means; and
- an electricity storage unit (705) connected to at least one electronic circuit of the peripheral and configured to cause, when electricity is transmitted to each said circuit, the destruction of each said circuit,
and wherein the electricity stored in the storage unit (705) is transmitted to each said circuit when, on the peripheral, a means (710) for detecting an integrity anomaly identifies the presence of a logical integrity anomaly,
wherein the anomaly detection unit (710) is reinforced by an automatic learning algorithm for detecting anomalies, on the peripheral, and wherein, when a first anomaly is detected, the peripheral (700) is logically deactivated and, on detection of a second anomaly, subsequent in time to the first anomaly, the electricity stored in the storage unit (705) is transmitted to each electronic circuit of the peripheral (700) to be destroyed.

2. Peripheral (700) according to claim 1, wherein the detection means (710) is an embedded software detection means detecting a number of attempts to decode or access the peripheral content protected by the peripheral (700).

3. Peripheral (700) according to one of claims 1 or 2, which comprises a memory (715) with encrypted information and a means (720) for decrypting information stored by the memory (715) based on a decryption key.

4. Peripheral (700) according to claim 3, which comprises a means (135) for locating the peripheral, the decryption means (720) being configured to operate based on the location information supplied by the location means and an item of location data associated to the data stored in the memory (715).

5. Peripheral (700) according to one of claims 3 or 4, wherein the decryption means (720) is configured to operate based on the location information supplied by the location means and an item of location data associated to the data stored in the memory (715).

6. Peripheral (700) according to one of claims 1 to 5, wherein the unit (122) for securing communication between the mobile terminal and the data network, comprises an autonomous DNS management system (127), the communication means and the securing unit being embedded in a single removable housing (130) of the mobile terminal.

7. Peripheral (700) according to claim 6, wherein the securing unit (122) comprises a firewall (125) filtering packets, received from the data network and intended for the mobile terminal, comprising a calculation unit configured to run a firewall software system.

8. Peripheral (700) according to one of claims 6 or 7, configured, when connected with the mobile terminal, to transmit a command to deactivate a wireless communication means of the mobile terminal.

9. Peripheral (700) according to one of claims 6 to 8, which comprises an electronic lock (145) preventing the peripheral from being put into operation, and a means (147) for unlocking the lock.

10. Peripheral (700) according to one of claims 6 to 9, wherein the second communication means (120) is configured to, when a connection to the internet network is established:
- identify the peripheral to a data server;
- receive files for updating the peripheral, the peripheral being configured to update according to the files received; and
- send to the server an item of information representative of the path taken by a data packet transmitted by the second communication means to reach the server,
the server being configured to enable or disable the connection according to the path information sent.

11. Peripheral (700) according to one of claims 1 to 10, which comprises a means (605) for authorising the activation of the peripheral, configured to activate the peripheral when an item of information determined by the authorisation means matches a predefined item of authorisation information.

12. Peripheral (700) according to claim 11, wherein the authorisation means (605) utilises:
- a means for inputting a password;
- an antenna for near-field communication or configured to receive an item of information using Bluetooth technology;
- a sensor capturing an item of a user's biometric information; and/or
- the first communication means for receiving an identifier of the mobile terminal.

13. Method (400) for communication with a data network utilising the internet protocol, which method comprises:
- a step (405) of detachably connecting to a mobile terminal the removable housing of a peripheral according to one of claims 1 to 12, by a connector of the peripheral establishing a wired communication between the housing and the mobile terminal;
- a first step (410) of two-way communication, by the peripheral, with the data network;
- a step (415) of the peripheral securing the communication between the mobile terminal and the data network;
- a second step (420) of two-way wired communication, by the peripheral, with the mobile terminal of packets not filtered by a firewall of the peripheral;
- a step of detection, by the peripheral, of the presence of a logical integrity anomaly of the peripheral;
- a step of electricity storage by an electricity storage unit of the peripheral connected to at least one electronic circuit of the peripheral and configured to cause, when electricity is transmitted to each said circuit, the destruction of each said circuit;
- a step of transmitting the stored electricity to each said circuit when the peripheral detects the presence of a logical integrity anomaly,
**characterised in that** the step to detect an anomaly on the peripheral, is reinforced by an automatic learning algorithm for detecting anomalies, on the peripheral, wherein, when a first anomaly is detected, the peripheral is logically deactivated and, on detection of a second anomaly, subsequent in time to the first anomaly, the electricity stored in the storage unit is transmitted to each electronic circuit of the peripheral to be destroyed.
